# EUROPÄISCHE PATENTSCHRIFT

(11) **EP 0 399 630 B1**
(45) Veröffentlichungstag und Bekanntmachung des Hinweises auf die Patenterteilung: **19.07.1995**
(21) Anmeldenummer: 90250125.3
(22) Anmeldetag: 15.05.1990
(51) Int. Cl.: B22F 7/06, B22F 3/02

(54) **Verfahren zur Herstellung von Fertigteilen als Verbundkörper aus pulverförmigen Werkstoffen**
Process for manufacturing composite workpieces from powder
Procédé pour la préparation d'articles composites à partir de poudre

(30) Priorität: 24.05.1989 DE 3917277
(43) Veröffentlichungstag der Anmeldung: 28.11.1990
(73) Patentinhaber: MANNESMANN Aktiengesellschaft, 40027 Düsseldorf (DE)
(72) Erfinder: Gormanns, Theodor, D-5140 Erkelenz 14 (DE); Solty, Walter, D-5142 Hückelhoven 7 (DE); Radewahn, Siegfried, D-4050 Mönchengladbach (DE)
(74) Vertreter: Meissner, Peter E., Dipl.-Ing.

(56) Entgegenhaltungen:
- GB-A- 677 234
- US-A- 3 353 215
- US-A- 4 578 317

## Beschreibung

Die Erfindung betrifft ein Verfahren zur Herstellung von fertigteilen durch Sintern von Preßlingen gemäß dem Oberbegriff des Patentanspruchs 1,

Aus der DE 32 06 981 C2 ist ein Verfahren zum Druckformen von Formteilen aus z.B. Sintermetallpulver bekannt, bei dem die Formteile bereichsweise aus unterschiedlichem Material aufgebaut sind (Verbundformkörper). Bei diesem Verfahren wird der Formhohlraum, der von der Matrize und dem sich in einer ersten Füllposition befindlichen Unterstempel eines Preßwerkzeugs gebildet wird, mit einem ersten Pulvermaterial oberflächenbündig gefüllt. Danach wird der Formhohlraum durch Absenken des Unterstempels in eine zweite Füllposition weiter vergrößert und mit einem zweiten Pulvermaterial wiederum oberflächenbündig aufgefüllt. Da der untere Teil der Matrize eine ins Forminnere vorspringende Stufe aufweist, gegenüber der der Unterstempel abgesenkt wird, bildet sich die Erweiterung des Formhohlraumes in Form einer Mulde gemäß der Böschungskurve des ersten Pulvers aus.

Daher kann die Trennlinie zwischen den beiden Pulverarten stets nur in Form dieser Böschungskurve ausfallen. Das bedeutet, daß vertikale Trennlinien zwischen den Werkstoffen mit diesem Verfahren überhaupt nicht realisierbar sind. Formteile in Gestalt von z.B. Zahnrädern, bei denen der eigentliche Radkörper aus einem einfachen Baustahl bestehen und lediglich die vergleichsweise schmale Zone des Verzahnungsbereichs aus einem hochlegierten verschließfesten Stahl gebildet sein soll, lassen sich damit nicht herstellen.

Diese Beschränkung ist bei dem aus der DE 33 05 879 A1 bekannten Verfahren zur Herstellung von Verbundformteilen aus zwei unterschiedlichen Legierungspulvern nicht mehr gegeben. Erreicht wird dies dadurch, daß ein Vorformling aus dem einen Legierungspulver in die Preßform eingelegt, der verbleibende Formraum mit dem anderen Legierungspulver aufgefüllt wird und beide Pulver zusammen zu dem gewünschten Formteil endverdichtet werden. Der Vorformling muß zu diesem Zweck eine handhabungsgerechte Formstabilität aufweisen. Aus diesem Grunde wird dem betreffenden Legierungspulver zunächst ein Kunstharzbinder zugesetzt. Dann wird das Pulver in einer aus der Gießereitechnik bekannten Kernschießmaschine unter mechanischer Verdichtung zum Vorformling eingeformt. Diese Vorbereitungen finden also außerhalb der Preßform statt, in der der eigentliche Verbundformkörper hergestellt wird. Dies bedingt neben entsprechendem Handhabungsaufwand für das Zusammenführen der Werkstoffanteile nach die Bereitstellung einer Kernschießmaschine. Außerdem ist es nachteilig, daß der Kunstharzbinder vor oder während des abschließenden Sinterns aus dem verdichteten Formkörper ausgebrannt werden muß.

Aus der US 4,353, 155 ist es bekannt, einen aus zwei Schichten unterschiedlicher Metallpulverwerkstoffe, nämlich einer Bronze- und einer Eisenschicht aufgebauten Formkörper herzustellen für die Verwendung als Gleitlager. Dabei wird in einem von einer Matrize gebildeten zylindrischen Formraum, in den koaxial ein Mittelstift eingefahren ist, zunächst das Eisenpulver eingefüllt. Der Mittelstift, der gestuft ausgeführt ist und im oberen Teil einen kleineren Durchmesser hat, wird nach dem Füllen hochgefahren und verdrängt einen Teil des bereits eingefüllten Eisenpulvers. Dieser verdrängte Teil muß zunächst entfernt werden, bevor eine Vorverdichtung des Eisenpulvers in der Matrize durch Pressen der Pulverfüllung zwischen einem Ober- und einem Unterstempel erfolgt. Der Oberstempel weist eine zentrale Bohrung auf, in die der obere Teil des Mittelstiftes gleitend einfährt. Während des Verdichtungsvorgangs bleibt die Preßfläche des Oberstempels stets bündig zur oberen Stirnfläche der Matrize stehen, taucht also nicht in den Formraum der Matrize ein. Letzteres ist nur bei dem Unterstempel der Fall. Wenn eine ausreichende Grünfestigkeit erreicht ist, also der erzeugte Vorpreßling beim Abziehen des Mittelstiftes nicht mehr zerfällt, wird der Mittelstift soweit nach unten gefahren, daß sein oberer Teil mit dem kleineren Durchmesser koaxial in dem Vorpreßling liegt. Dadurch entsteht ein offener Formhohlraum zwischen dem Vorpreßling und dem Mittelstift, der mit dem Bronzepulver aufgefüllt wird. Danach erfolgt unter Einwirkung von Ober- und Unterstempel auf die gesamte Pulvermasse die Endverdichtung des Preßlings, der nach dem Ausformen in bekannter Weise gesintert wird.

Dieses Verfahren hat erhebliche Nachteile. Zunächst führt das einseitige Einfahren nur des Unterstempels in den Formraum bei der Erzeugung des Vorpreßlings infolge der Reibung der Pulversäule an den Matrizenwänden zu einer in Preßrichtung ungleichmäßigen Vorverdichtung. Darüberhinaus ist die Pulverhandhabung sehr umständlich, weil die Restmenge des aus der Matrize herausgedrückten Pulvers, die je nach Füllfaktor unterschiedlich ist, entfernt werden muß. Hierzu kann die Pulvermenge z.B. mittels Druckluft weggeblasen oder mittels eines Besens von Hand weggefegt werden.

Beides erhöht die Herstellkosten für die Preßlinge. Würde man das überschüssige Pulver nach Durchführung der Vorverdichtung einfach wegschieben wollen, ginge das nur bei zurückgezogenem Mittelstift, also bei offenem Formraum für das Bronzepulver. Infolgedessen würde ein Teil des Eisenpulvers in diesen Formraum hineinfallen und dort zu einer "Werkstoffkontamination" führen. Ferner ist es nachteilig, daß die relative Verdichtung in den beiden Pulverschichten bei der gemeinsamen Endverdichtung zwangsläufig unterschiedlich ausfallen muß, da die Formraumhöhe für das Bronzepulver geringer ist als die für das Eisenpulver, nämlich genau der Höhe des Vorpreßlings entspricht und folglich auch die Preßwege unterschiedlich sind. Bei der Herstellung von Gleitlagern ist dies zulässig oder sogar erwünscht, da eine offene Porenstruktur der Bronzeschicht die Schmiereigenschaften begünstigen kann. Zur Herstellung von Teilen mit möglichst hoher Dichte und insbesondere mit etwa gleicher relativer Verdichtung in den einzelnen Materialschichten ist dieses Verfahren nicht geeignet. Ebenso wenig ist dieses Verfahren geeignet, um in den einzelnen Werkstoffschichten beliebige Verdichtungsgrade gezielt einstellen zu können, da die Formraumhöhe für das Bronzepulver niemals größer sein kann als die für die Mindestgrünfestigkeit einzustellende Höhe des Vorpreßlings. Außerdem läßt dieses Verfahren die Herstellung von Schichtverbundkörpern mit mehr als zwei Werkstoffschichten nicht zu.

Aus der US-A- 45 78 317 ist eine Vorrichtung und ein Verfahren zur Herstellung eines Zapfens aus zwei verschiedenen pulverförmigen Sinterwerkstoffen bekannt.

Bei der in dieser Schrift beschriebenen Herstellung wird zunächst aus dem ersten Pulver eine auf Enddichte gepreßte Pulversäule erzeugt und anschließend wird während der Verdichtung der zweiten Pulversäule die erste Pulversäule in die der Teilegeometrie entsprechende Position verschoben, so daß bei dieser Verdichtung das endverdichtete Komposit gebildet wird. Es kommt dabei zu keiner weiteren Verdichtung der ersten Pulversäule.

Aufgabe der Erfindung ist es daher, ein gattungsgemäßes Verfahren dahingehend zu verbessern, daß Formkörper mit vertikal verlaufenden Trennlinien zwischen den einzelnen Anteilen des Werkstoffverbundes ohne die geschilderten Nachteile, also mit beliebiger, insbesondere mit nahezu gleicher relativer Verdichtung, herstellbar sind.

Gelöst wird diese Aufgabe erfindungsgemäß mit den kennzeichnenden Merkmalen des Patentanspruchs 1; vorteilhafte Weiterbildungen des erfindungsgemäßen Verfahrens sind in den Unteransprüchen 2 bis 7 angegeben.

Das Prinzip der erfindungsgemäßen Lösung ist darin zu sehen, daß in dem für das Pressen benötigten Preßwerkzeug zunächst nur der Teil des Formraumes freigegeben wird, der von einem der Pulverwerkstoffe des zu erzeugenden Verbundfertigteils ausgefüllt werden soll. Die übrigen Teile des Formraumes bleiben durch die in die Matrize eingefahrenen Unterstempel gesperrt. Der in den freien Formraumteil eingefüllte Pulverwerkstoff wird dann soweit durch Einwirkung von Ober- und Unterstempel der benutzten Presse verdichtet, daß ein Teilformkörper mit ausreichender Formstabilität entsteht. Das bedeutet, daß der Teilformkörper beim Zurückfahren der Preßstempel nicht zerstört werden darf, sondern unbeschädigt in der Matrize stehenbleiben muß. Als zweckmäßig hat sich eine Grünfestigkeit im Bereich von etwa 5 bis 10 N/mm² erwiesen. Geringere Grünfestigkeiten können den Zerfall des Teilformkörpers bedeuten, während bei höheren Grünfestigkeiten der homogene Verbund des Teilformkörpers mit dem an diesen angrenzenden Pulverwerkstoff des Werkstoffverbundes beeinträchtigt werden kann.

In einem zweiten Schritt wird ein unmittelbar an dem Teilformkörper liegender Teil des Formraumes durch entsprechendes Zurückfahren eines oder mehrerer Unterstempel zur Befüllung in eine definierte Füllstellung mit einem anderen Pulverwerkstoff freigegeben. Die Füllstellung der Unterstempel richtet sich jeweils zum einen nach der an der jeweiligen Stelle geforderten Formteilhöhe (Teilegeometrie), zum anderen nach der Fülldichte des jeweiligen Pulverwerkstoffs und schließlich auch nach der angestrebten Dichte des Preßlings bzw. des gesinterten Fertigteils in den einzelnen Werkstoffschichten. Anschließend wird auch der neueingefüllte Pulverwerkstoff in entsprechender Weise vorverdichtet. Dieser Vorgang kann sich bei Bedarf zwecks Aufbaus weiterer nebeneinander angeordneter Schichten des Verbundformkörpers mehrfach wiederholen. Nach Erzeugung der letzten Schicht werden dann die in der Form befindlichen vorverdichteten Pulverwerkstoffe insgesamt unter gleichzeitiger Einwirkung aller Ober-und Unterstempel auf die endgültige Form des Preßlings verdichtet. Bei Verwendung von Stahlwerkstoffen bedeutet dies im Regelfall eine Enddichte von etwa 6,4 - 6,8 g/cm³. Insbesondere bei mechanisch hoch beanspruchten Teilen können auch höhere Enddichten angestrebt werden. Es ist selbstverständlich auch möglich, die Endverdichtung bei einzelnen Preßstempeln mit unterschiedlichem Verdichtungsgrad auszuführen, um gezielt ganz bestimmte Dichten einzustellen. In jedem Fall wird jedoch, über die Formteilhöhe gesehen, in den einzelnen, einem Preßstempel zugeordneten Werkstückzonen jeweils eine gleichbleibende Dichte erzielt. Bei der Durchführung der Endverdichtung werden die Geschwindigkeiten der einzelnen Preßstempel so zueinander eingestellt bzw. geregelt, daß die jeweilige Preßendstellung gleichzeiting erreicht wird. Nach dem Ausformen des Preßlings aus dem Preßwerkzeug wird dieser gesintert, wobei der bereits beim Pressen erzeugte innige Verbund zwischen den einzelnen Schichten des Verbundformkörpers endgültig gefestigt wird.

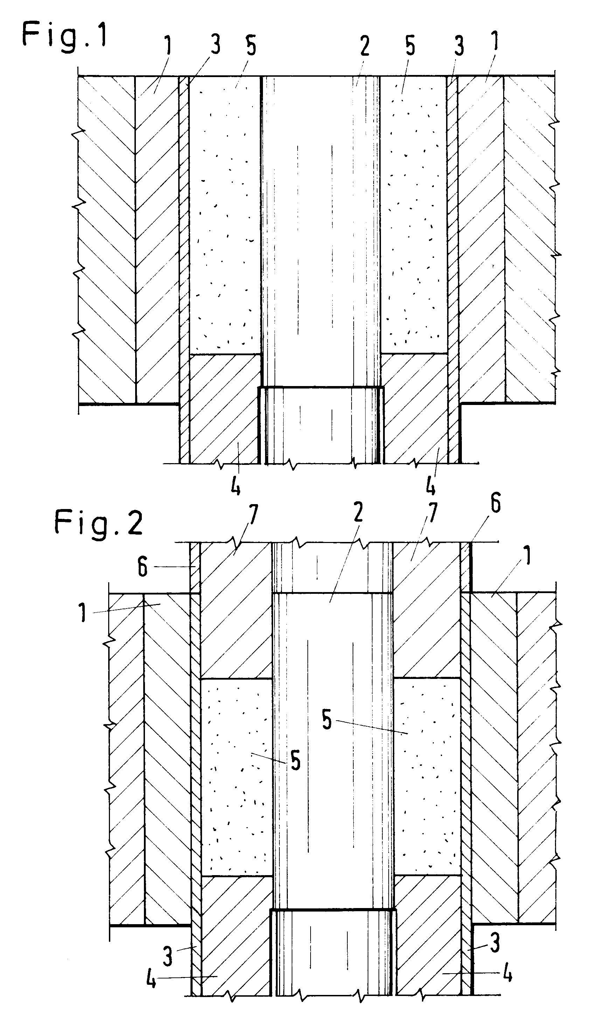

Nachfolgend wird die Erfindung anhand dies in den Figuren 1 bis 6 dargestellten Ausführungsbeispiels näher erläutert. In Form von Schnittbildern eines Preßwerkzeugs sind darin die verschiedenen Stadien des Preßzyklus bei der Herstellung eines einfachen Preßlings wiedergegeben.

Der erzeugte Preßling ist ein Hohlzylinder aus einem Grundwerkstoff mit einer äußeren Mantelschicht aus einem anderen Pulverwerkstoff. Das nachstehend beschriebene Preßverfahren wird als Gegenpreßverfahren bezeichnet. Selbstverständlich kann in entsprechender Weise auch das Matrizenabziehverfahren eingesetzt werden.

In Figur 1 ist die Füllstellung für die Einfüllung des Grundwerkstoffs 5, der den überwiegenden Teil des Verbundformkörpers ausmacht, dargestellt. Während sich der innere Unterstempel 4 in seiner unteren Füllstellung befindet, steht der äußere Unterstempel 3 ebenso wie der zylindrische Kern 2 (Mittelstift) mit seiner oberen Stirnfläche bündig zur Oberkante der Matrize 1 des Preßwerkzeugs.

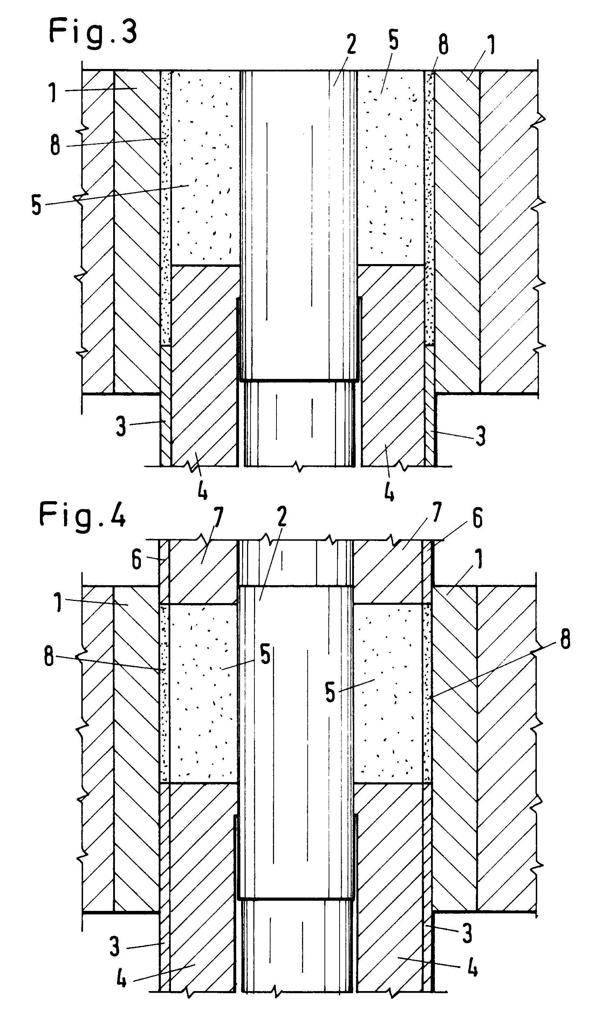

Daher kann ein nichtdargestelltes Füllsystem in bekannter Weise über den zwischen dem Kern 2 und dem äußeren Unterstempel 3 gebildeten Füllraum hinwegfahren und den Füllraum oberflächenbündig mit dem Grundwerkstoff 5 füllen. Danach wird, während die Matrize 1, der äußere Unterstempel 3 und der Kern 2 ortsfest bleiben, der Unterstempel 4 ein wenig abgesenkt, um den inneren Oberstempel 7 (Figur 2) herunterzufahren und oben in den Formraum eintauchen zu lassen. Danach werden die Stempel 4 und 7 gleichmäßig gegensinnig in den eingefüllten Grundwerkstoff 5 hineingepreßt, um diesen soweit vorzuverdichten, daß ein ausreichend formstabilier Teilformkörper 5 entsteht, der nicht zerbricht, wenn, wie dies in Figur 3 dargestellt ist, der äußere Unterstempel 3 nach unten abgezogen wird, um in seine Füllstellung zu gelangen. Der Teilformkörper 5 wird dabei mit seiner oberen Stirnfläche bündig zur Stirnfläche der Matrize 1 gefahren. Zwischen der Matrize 1 und der äußern Mantelfläche des Teilformkörpers 5 sowie des bündig darunterstehenden inneren Unterstempels 4 ist hierdurch ein zweiter Füllraum entstanden, der mittels eines zweiten, ebenfalls nichtdargestelltes Füllsystem mit dem anderen Pulverwerkstoff 8 oberflächenbündig gefüllt wird.

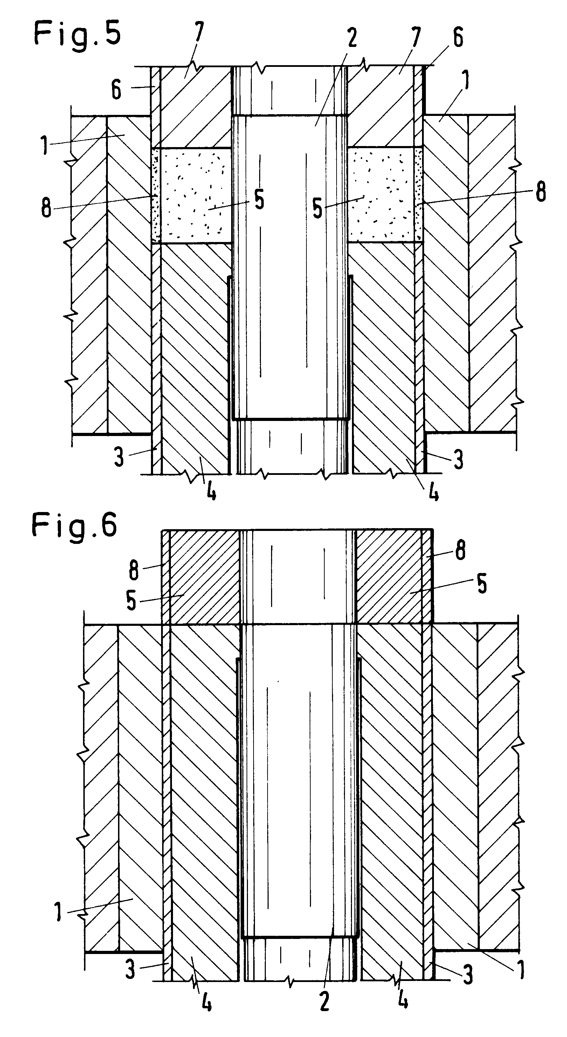

Danach werden die beiden Unterstempel 3 und 4 gemeinsam geringfügig abgesenkt, um die beiden Oberstempel 6 und 7 in die Öffnung der Matrize 1 eintauchen zu lassen. Anschließend wird der äußere Unterstempel 3 bündig mit dem Unterstempel 4 nach oben gefahren, so daß der Pulverwerkstoff 8 etwa die gleiche Vorverdichtung erfährt wie der Grundwerkstoff 5 (Figur 4). Dann erst wird die Endverdichtung des Preßlings vorgenommen (Figur 5), indem die beiden Oberstempel 6 und 7 und die beiden Unterstempel 3 und 4 bei stillstehender Matrize 1 und unbewegtem Kern 2 bis in die Preßendstellung gegeneinander gefahren werden. Nach Zurückziehen der beiden Oberstempel 6 und 7 werden die Matrize 1 und der Kern 2 gemeinsam bei stillstehenden Unterstempeln 3 und 4 nach unten abgezogen, so daß der gebildete Preßling 5, 8 freigelegt wird. Dieser kann anschließend zu einem Fertigteil gesintert werden.

Obwohl für das dargestellte Ausführungsbeispiel ein sehr einfaches Teil ausgewählt wurde, sind auch hierbei eine Reihe von Abwandlungen im Rahmen der Erfindung möglich. So könnten z.B. auch die beiden Oberstempel 6 und 7 zu einem einzigen Oberstempel zusammengefaßt sein. In diesem Fall wäre dann zur Erzeugung des Teilformkörpers 5 während der Vorverdichtung der äußere Unterstempel 3 mit dem auf ihn stoßenden Oberstempel 6, 7 nach unten zu bewegen.

Um bei dem Pulverwerkstoff 8 ebenso wie bei dem Grundwerkstoff 5 eine möglichst gleichmäßige Vorverdichtung zu erzielen, indem der Oberstempel 6 um den gleichen Weg in den Pulverwerkstoff 8 hineinbewegt wird wie der Unterstempel 3, könnte im vorliegenden Beispiel vor Beginn der Vorverdichtung nach Eintauchen der Oberstempel 6 und 7 in die Matrize 1 zunächst der Oberstempel 7 gemeinsam mit dem Unterstempel 4 und gegebenenfalls gemeinsam mit dem Kern 2 nach unten gefahren werden, bis der zwangsläufig mitgenommene Formteilkörper 5 eine symmetrische Höhenlage zur Pulversäule 8 erreicht hat. Sofern ein Preßling erzeugt werden soll, bei dem die verschiedenen Werkstoffschichten untereinander eine Höhenabstufung aufweisen, die, in Preßrichtung gesehen, auch unsymmetrisch sein kann, wird der Teilformkörper 5 zur Erzielung des gleichen Effektes so weit innerhalb der Matrize 1 verfahren, bis der Schwerpunkt der Pulversäule 8 relativ zum Schwerpunkt des Teilformkörpers 5 eine Höhenlage erreicht hat, die der Soll-Höhenlage der beiden Schwerpunkte im endverdichteten Preßling entspricht. Bei mehr als zwei Werkstoffschichten gilt diese Vorgehensweise entsprechend.

Eine weitere Variante, die sich im Hinblick auf eine gleichmäßige Befüllung und Verdichtung des äußeren Pulverwerkstoffs 8 am Verbundformkörper vielfach als besonders vorteilhaft herausstellt, ist die, daß zunächst der dünne äußere Mantel 8 des Verbundformkörpers durch Vorverdichtung erzeugt wird und erst danach das Pulver des Grundwerkstoffs 5 eingefüllt und ebenfalls vorverdichtet wird.

Das erfindungsgemäße Verfahren eignet sich in hervorragender Weise auch für die Herstellung von Formteilen mit komplizierterer Gestalt wie etwa Zahnrädern. Bei einem Stirnrad wird für den außenliegenden Zahnkranz z.B. ein möglichst gute Verschleißfestigkeit gewährleistendes hochlegiertes Stahlpulver verwendet, während der innere Radkörper aus einem niedrig- oder unlegierten und folglich sehr viel billigeren Stahlpulver erzeugt wird. Die Matrize des Formwerkzeugs hat in einem solchen Fall keine einfache glattzylindrische Form, sondern weist die Negativform der gewünschten Verzahnung auf. Der Radkörper muß nicht die Gestalt einer glatten Scheibe haben, sondern kann bei entsprechender Teilung von Ober- und Unterstempeln und geeigneter Gestaltung der preßflächen nahezu beliebige Form aufweisen.

Anstelle einer Außenverzahnung kann auch eine Innenverzahnung hergestellt werden, indem das Zahnprofil in den Kern des Preßwerkzeugs eingearbeitet wird. Nach dem Sintern stellen die auf diese Weise hergestellten Formkörper bereits Fertigteile dar, die im allgemeinen keiner wesentlichen mechanischen Bearbeitung mehr bedürfen. Zahnräder, die in der beschriebenen Weise mit einem unlegierten Grundkörper und einem hochlegierten Zahnkranz hergestellt wurden, wiesen nicht nur hervorragende Rundlaufeigenschaften sondern auch ausgezeichnete mechanische Festigkeitseigenschaften auf, die sie auch für Einsatzfälle mit hohen mechanischen Beanspruchungen geeignet erscheinen lassen, ohne daß die Werkstücke zuvor einer aufwendigen Ertüchtigungsbehandlung wie z.B. Schmieden unterzogen werden müssen.

Mit besonderem Vorteil läßt sich die Erfindung benutzen zur Herstellung von Schichtverbundkörpern, die aus einem metallischen Grundkörper bestehen und in bestimmten Zonen aus oxidischen oder Karbidwerkstoffen gebildet sind, um z.B. extremen Anforderungen an die Verschleißfestigkeit gerecht zu werden. Beispiele hierfür sind Schneidwerkzeuge mit Schneiden aus Hartmetall. Ein weiteres aussichtsreiches Anwendungsgebeit ist in der Kombination herkömmlicher Werkstoffe mit Memory-Metallen zu sehen, um z.B. mit dem Memory-Effekt eine Sensorfunktion zu realisieren.

Die Erzielung möglichst hoher und gleicher Verdichtungen ist in erster Linie anzustreben bei der Herstellung von Verbundformkörpern, deren Schichten jeweils aus Stahlwerkstoffen bestehen. Bewußt unterschiedlich eingestellte Verdichtungsgrade können insbesondere bei der Kombination artfremder Werkstoffe (z.B. Stahl und oxidische oder Karbidwerkstoffe) vorteilhaft sein, um beispielsweise negativen Auswirkungen des unterschiedlichen Wärmeausdehnungsverhaltens der Schichten beim Sintern der Preßlinge zu begegnen.

## Patentansprüche

1. Verfahren zur Herstellung von Fertigteilen durch Sintern von Preßlingen, die als Verbundformkörper aus einem pulverförmigen Grundwerkstoff und mindestens einem weiteren pulverförmigen Werkstoff, insbesondere aus unterschiedlichen Metallpulvern, Karbiden und/oder Oxiden, gebildet sind, wobei die Preßlinge in einem von einer Matrize eingeschlossenen Formraum, auf den mindestens je ein Oberstempel und mindestens zwei ineinander geführte Unterstempel in axialer Richtung des Preßlings pressend einwirken, in der Weise erzeugt werden, daß die Pulverwerkstoffe nacheinander in schüttfähigem Zustand in den Formraum eingebracht werden, wobei der zuerst eingebrachte Pulverwerkstoff in radialer richtung gesehen nur einen Teil des Formraums ausfüllt und nach dem Einfüllen durch den oder die Ober- und Unterstempel zu einem Teilformkörper so weit vorverdichtet wird, daß die erreichte Grünfestigkeit, des Teilformkörpers ausreicht, daß der Teilformkörper beim Zurückfahren der Preßstempel nicht zerfüllt und wobei danach mindestens ein zweiter Pulverwerkstoff in den von dem vorverdichteten Teilformkörper nicht ausgefüllten Teil des Formraumes eingebracht wird und wobei schließlich die eingebrachten Pulverwerkstoffe insgesamt einer Endverdichtung unterzogen werden,
dadurch gekennzeichnet,
daß dar zweite Pulverwerkstoff ebenfalls separat vorverdichtet wird, daß bei Bedarf danach noch weitere Pulverwerkstoffe eingebracht und jeweils in entsprechender Weise separat vorverdichtet werden, bevor abschließend die gemeinsame Endverdichtung der eingebrachten Pulverwerkstoffe vorgenommen wird.

2. Verfahren nach Anspruch 1,
dadurch gekennzeichnet,
- daß der vorverdichtete Teilformkörper dadurch erzeugt wird, das Unter- und Oberstempel relativ zur Matrize gleichmäßig und gegensinnig in den mit dem ersten Pulverwerkstoff ausgefüllten Teil des Formraums hineingepreßt werden,
- daß vor dem Einbringen des zweiten Pulverwerkstoffs bei zurückgefahrenem Oberstempel bzw. Oberstempeln die obere Stirnfläche des vorverdichteten Teilformkörpers bündig mit der oberen Stirnfläche der Matrize gefahren wird,
- daß dann ein Unterstempel, der unabhängig von einem fakultativ vorhandenen Mittelstift verfahrbar ist und der bis dahin den für den zweiten Pulverwerkstoff vorgesehenen Formraum ausgefüllt hat, mit seiner Preßfläche in seine Füllstellung unterhalb der oberen Stirnfläche des vorverdichteten Teilformkörpers gebracht wird,
- daß nach dem Einfüllen des zweiten Pulverwerkstoffs eine separate Vorverdichtung des zweiten, Pulverwerkstoffes vorgenommen wird unter gleichzeitiger Einwirkung dieses Unterstempels und des oder der Oberstempel,
- daß danach gegebenenfalls weitere Pulverwerkstoffe in entsprechender Weise nacheinander jeweils eingebracht und separat vorverdichtet werden, bevor der nächste Pulverwerkstoff eingebracht wird,
- und daß schließlich die gemeinsame Endverdichtung der eingebrachten Pulverwerkstoffe vorgenommen wird.

3. Verfahren nach einem der Ansprüche 1 oder 2,
dadurch gekennzeichnet,
daß zur Erzielung gleicher relativer Verdichtungen in den jeweils gleiche Formteilhöhe aufweisenden unterschiedlichen Materialschichten des endverdichteten Preßlings der Unterstempel, der bis dahin den für den zweiten oder weiteren Pulverwerkstoff vorgesehenen Formraum ausgefüllt hat, mit seiner Preßfläche in einer Füllstellung unterhalb der unteren Stirnfläche des vorverdichteten Teilformkörpers gefahren wird.

4. Verfahren nach Anspruch 1 bis 3,
dadurch gekennzeichnet,
daß nach der Einbringung eines weiteren Pulverwerkstoffes und vor dessen Vorverdichtung die mit dem vorverdichteten Teilformkörper korrespondierenden Ober- und Unterstempel an den Stirnflächen des Teilformkörpers anliegend gemeinsam und geregelt so verfahren worden, bis der Schwerpunkt des Teilformkörpers relativ zum Schwerpunkt der Pulversäule des weiteren Pulverwerkstoffes eine Höhenlage erreicht hat, die der Soll-Höhenlage der beiden Schwerpunkte zueinander im endverdichteten Formkörper entspricht, und daß erst danach die Vorverdichtung erfolgt, wobei die mit der Pulversäule des weiteren Pulverwerkstoffes korrespondierenden Ober- und Unterstempel jeweils um den gleichen Weg in die Pulversäule hineinbewegt werden.

5. Verfahren nach einem der Ansprüche 1 bis 4 zur Herstellung von im wesentlichen rotationssymmetrischen Fertigteilen mit einem dickwandigen inneren hohlzylindrischen Ringkörper aus dem Grundwerkstoff und einem diesen umgebenden vergleichsweise dünnwandigen äußeren Ringkörper aus einem anderen Werkstoff,
dadurch gekennzeichnet,
daß zuerst das Füllvolumen des äußeren Ringkörpers gefüllt und vorverdichtet und erst danach das Füllvolumen des inneren Ringkörpers gefüllt und ebenfalls separat vorverdichtet wird.

6. Verfahren nach einem der Ansprüche 1 bis 5,
dadurch gekennzeichnet,
daß als Grundwerkstoff ein unlegiertes oder niedriglegiertes Stahlpulver und als weiterer Werkstoff ein hochlegiertes Stahlpulver oder ein in metallischer Matrix eingebettetes Oxid oder Karbid oder ein Memory-Metall verwendet wird.

7. Verfahren nach einem der Ansprüche 1 bis 6,
dadurch gekennzeichnet,
daß zur Steuerung der Preßstempel eine elektronische Steuerung vorgesehen ist.

## Claims

1. A method for the production of finished parts by sintering compacts, which are formed as composite moulded articles from a powdered base material and at least one additional powdered material, in particular for different metal powders, carbides and/or oxides, with the compacts being produced in a moulding chamber enclosed by a mould body, on which chamber at least one upper die and at least two lower dies guided in one another have a pressing effect in the axial direction of the compact, in that the powdered materials are introduced into the moulding chamber in succession in a pourable state, with the first powdered material introduced, viewed in the radial direction, only filling part of the moulding chamber and after pouring in being pre-compacted by the upper and lower die(s) to form a partial moulded article to such an extent that the green strength of the partial moulded article achieved is sufficient for the partial moulded article not to collapse upon withdrawal of the press die and wherein thereafter at least one second powdered material is introduced into the part of the moulding chamber not filled by the pre-compacted partial moulded article and wherein finally the powdered materials introduced are subjected to final compaction all together, characterised in that the second powdered material is likewise separately pre-compressed, that if required additional powdered materials are introduced thereafter and are each separately pre-compacted in corresponding manner, before finally the joint final compaction of the powdered materials introduced is effected.

2. A method according to Claim 1, characterised in that
- the pre-compacted partial moulded article is produced in that the lower and upper dies are pressed relative to the mould body uniformly and in opposite directions into that part of the moulding chamber filled with the first powdered material,
- that before the introduction of the second powdered material with the upper die or dies retracted the upper end face of the pre-compacted partial moulded article is moved flush with the upper end face of the mould body,
- that a lower die which is movable independently of a central pin which may optionally be present and which has until then filled the moulding chamber provided for the second powdered material is then brought with its pressing surface into its filling position beneath the upper end face of the pre-compacted partial moulded article,
- that after the pouring in of the second powdered material a separate pre-compaction of the second powdered material is effected with simultaneous action of this lower die and the upper die or dies,
- that thereafter optionally additional powdered materials are introduced correspondingly in succession and are separately pre-compacted before the next powdered material is introduced,
- and that finally the common final compaction of the powdered materials introduced is effected.

3. A method according to one of Claims 1 or 2, characterised in that in order to achieve the same relative compactions in the different material layers of the finally-compacted compact which each have the same moulded-part height, the lower die, which has until then filled the moulding chamber provided for the second or additional powdered material, is moved with its pressing surface into a filling position beneath the lower end face of the pre-compacted partial moulded article.

4. A method according to Claims 1 to 3, characterised in that after the introduction of an additional powdered material and before the pre-compaction thereof the upper and lower dies which correspond to the precompacted partial moulded article, lying against the end faces of the partial moulded article, are moved jointly and in controlled manner until the centre of gravity of the partial moulded article relative to the centre of gravity of the powder column of the additional powdered material has reached a vertical position which corresponds to the desired vertical position of the two centres of gravity relative to each other in the finally-compacted moulded article, and that not until then does pre-compaction take place, with the upper and lower dies corresponding with the powder column of the additional powdered material each being moved into the powder column by the same amount of travel.

5. A method according to one of Claims 1 to 4 for the production of substantially rotationally symmetrical finished parts with a thick-walled inner hollow cylindrical annular body made of the base material and a comparatively thin-walled outer annular body made from another material surrounding it, characterised in that first of all the filling volume of the outer annular body is filled and pre-compacted and not until then is the filling volume of the inner annular body filled and likewise separately pre-compacted.

6. A method according to one of Claims 1 to 5, characterised in that an unalloyed or low-alloyed steel powder is used as base material and a high-alloyed steel powder or an oxide or carbide embedded in a metallic matrix or a memory metal is used as the additional material.

7. A method according to one of Claims 1 to 6, characterised in that an electronic control means is provided for controlling the press dies.

## Revendications

1. Procédé pour fabriquer des produits finis par frittage de pièces pressées, qui sont formées, comme corps moulés composites, à partir d'une matière de base en poudre et d'au moins une autre matière pulvérulente, en particulier à partir de différents carbures, oxydes et/ou poudres métalliques, les pièces pressées étant créées dans un espace de moulage fermé par une matrice, sur lequel agissent, à chaque fois, au moins un poinçon supérieur et au moins deux poinçons inférieurs guidés l'un dans l'autre, dans la direction axiale de la pièce pressée, en pressant, de sorte que les matières pulvérulentes sont introduites l'une après l'autre dans l'espace de moulage dans l'état en vrac, la matière en poudre introduite tout d'abord, dans la direction radiale, ne remplissant qu'une partie de l'espace de moulage et, après le remplissage, étant précomprimée par le ou les poinçons supérieurs et inférieurs en un corps de moulage partiel, de sorte que la résistance à crue atteinte du corps de moulage partiel suffit pour que le corps de moulage partiel ne se désagrège pas lors du retour du poinçon de pressage et, ensuite, au moins une seconde matière en poudre étant introduite dans la partie de l'espace de moulage non remplie par le corps de moulage partiel précomprimé et, enfin, les matières en poudre introduites étant soumises ensemble à une compression finale,
caractérisé en ce que la seconde matière en poudre est de même précomprimée, de façon séparée, en ce que, le cas échéant, d'autres matières en poudre sont encore introduites ensuite, et, à chaque fois, précomprimées de façon correspondante, séparément, avant qu'enfin la compression finale commune des matières en poudre introduites soit mise en oeuvre.

2. Procédé selon la revendication 1,
caractérisé en ce que :
- le corps de moulage partiel précomprimé est engendré en ce que le poinçon supérieur et le poinçon inférieur sont pressés, par rapport à la matrice, de façon uniforme et en sens opposé, dans la partie de l'espace de moulage remplie par la première matière en poudre,
- avant l'introduction de la seconde matière en poudre, lorsque le poinçon supérieur ou les poinçons supérieurs sont ramenés en arrière, la face frontale supérieure du corps de moulage partiel précomprimé est déplacée à fleur avec la face frontale supérieure de la matrice,
- ensuite un poinçon inférieur, qui peut être déplacé indépendamment d'une broche médiane présente facultativement et qui, jusque là, a rempli l'espace de moulage prévu pour la seconde matière en poudre, est amené, avec sa surface de pressage, dans sa position de remplissage au-dessous de la face frontale supérieure du corps de moulage partiel précomprimé,
- après le remplissage de la seconde matière en poudre, une précompression séparée de la seconde matière en poudre est effectuée sous l'action simultanée de ce poinçon inférieur et du ou des poinçons supérieurs,
- ensuite, le cas échéant, d'autres matières en poudre sont introduites, à chaque fois, l'une après l'autre d'une façon correspondante et sont précomprimées de façon séparée, avant que la matière en poudre suivante soit introduite, et
- enfin la compression finale commune des matières en poudre introduites est mise en oeuvre.

3. Procédé selon une des rendications 1 ou 2,
caractérisé en ce que, pour atteindre des compressions relatives identiques dans les couches de matière différentes de la pièce pressée comprimée à l'état final, présentant à chaque fois la même hauteur de pièce, le poinçon inférieur, qui, jusqu'à présent, a rempli l'espace de moulage prévu pour la seconde matière en poudre ou les autres, est déplacé avec sa surface de pressage dans une position de remplissage au-dessous de la face frontale inférieure du corps de moulage partiel précomprimé.

4. Procédé selon les revendications 1 à 3,
caractérisé en ce que, après l'introduction d'une autre matière en poudre et avant sa précompression, les poinçons supérieur et inférieur correspondant au corps de moulage partiel précomprimé sont déplacés de façon réglée et commune de façon adjacente aux faces frontales du corps de moulage partiel, jusqu'à ce que le centre de gravité du corps de moulage partiel, par rapport au centre de gravité de la colonne de poudre de l'autre matière en poudre, ait atteint une hauteur qui correspond à la hauteur de consigne des deux centres de gravité l'un par rapport à l'autre dans le corps de moulage comprimé de façon finale, et en ce que, alors, la précompression est effectuée, les poinçons inférieur et supérieur correspondant à la colonne de poudre de l'autre matière en poudre étant à chaque fois déplacés de la même course dans la colonne de poudre.

5. Procédé selon une des revendications 1 à 4, pour fabriquer des produits finis essentiellement à symétrie de révolution, comportant un corps annulaire cylindrique creux interne à paroi épaisse, constitué de la matière de base, et un corps annulaire externe à paroi mince comparable entourant celui-ci, constitué d'un autre matière,
caractérisé en ce que, tout d'abord, le volume du corps annulaire externe est rempli et précomprimé et, ensuite, le volume du corps annulaire interne est rempli et, de même, précomprimé de façon séparée.

6. Procédé selon une des revendications 1 à 5,
caractérisé en ce que, comme matière de base, on utilise une poudre d'acier non alliée ou faiblement alliée et, comme autre matière, une poudre d'acier fortement alliée ou un oxyde ou carbure noyé dans une matrice métallique ou un métal à mémoire de forme.

7. Procédé selon une des revendications 1 à 6,
caractérisé en ce que, pour commander les poinçons de pressage, il est prévu une commande électronique.
